# EUROPÄISCHE PATENTANMELDUNG

(11) **EP 0 947 662 A1**
(43) Veröffentlichungstag der Anmeldung: **06.10.1999**
(21) Anmeldenummer: 99106107.8
(22) Anmeldetag: 01.04.1999
(51) Int. Cl.: E21B 10/58

(54) **Hartmetallplatte und damit bestückter Gesteinsbohrer**

(30) Priorität: 02.04.1998 DE 29806084 U
(71) Anmelder: PLICA WERKZEUGFABRIK AG, 8753 Mollis (CH)
(72) Erfinder: Die Erfindernennung liegt noch nicht vor
(74) Vertreter: Sulzbach, Werner, Dipl.-Chem. Dr.

(57) **Zusammenfassung**

Hartmetallplatte (10) für Bohrwerkzeuge, insbesondere Gesteinsbohrer, mit einem wenigstens eine Schneidkante (12) tragenden Kopfteil (14) und einem der Geometrie einer Aufnahmenut (54) im Bohrwerkzeug angepaßten Fußteil (16). Um die Haftung der Hartmetallplatte im Bohrwerkzeug zu verbessern, weist das Fußteil (16) wenigstens einen sich von seiner Unterseite (24) in Richtung auf die Aufnahmenut (54) erstreckenden Fortsatz (26) auf, der zur Aufnahme in einer in der Aufnahmenut (54) gebildeten Ausnehmung (56) mit zum Fortsatz (26) korrespondierender Form bestimmt ist. Die Hartmetallplatte (10) wird bei einer Ausführungsform der Erfindung in wenigstens eine an einer Stirnseite des Bohrkopfes (52) eines Gesteinsbohrers gebildete Aufnahmenut (54) eingesetzt und darin befestigt.

## Beschreibung

Die vorliegende Erfindung betrifft eine Hartmetallplatte für Bohrwerkzeuge, insbesondere Gesteinsbohrer, mit einem wenigstens eine Schneidkante tragenden Kopfteil und einem der Geometrie einer Aufnahmenut im Bohrwerkzeug angepaßten Fußteil.

Darüber hinaus betrifft die Erfindung einen Gesteinsbohrer mit einem Schaft, einem Bohrkopf oder einer Bohrkrone und mindestens einer Hartmetallplatte der genannten Art, die in wenigstens eine an einer Stirnseite des Bohrkopfes gebildeten Aufnahmenut eingesetzt und darin durch Verlöten, Verschweißen oder Verkleben befestigt ist.

Derartige Hartmetallplatten und Bohrwerkzeuge sind aus der deutschen Offenlegungsschrift DE 196 01 356 A1 bekannt. Die bekannten Hartmetallplatten sind durch im wesentlichen teilkreisförmige Ausbuchtungen im Seitenbereich des Fußteils gegenüber einer Verschiebung in radialer Richtung gesichert. Trotz dieser besonderen Ausgestaltung ergeben sich aber immer noch Probleme hinsichtlich der sicheren Haftung der Hartmetallplatten im Bohrwerkzeug und der damit verbundenen Gefahr des Ausbrechens der Hartmetallplatte während des Betriebs der Bohrwerkzeuge.

Der Erfindung liegt daher die Aufgabe zugrunde, eine Hartmetallplatte und einen damit bestückten Gesteinsbohrer zu schaffen, der eine sichere und dauerhafte Verbindung zwischen Hartmetallplatte und Bohrwerkzeug gewährleistet, ein einfaches Einsetzen und Zentrieren der Hartmetallplatte ermöglicht und die Bruchgefahr beim Betrieb des Gesteinsbohrer vermindert.

Diese Aufgabe wird erfindungsgemäß durch eine Hartmetallplatte für Bohrwerkzeuge, insbesondere Gesteinsbohrer, mit einem wenigstens eine Schneidkante tragenden Kopfteil und einem der Geometrie einer Aufnahmenut in dem Bohrwerkzeug angepaßten Fußteil gelöst, die dadurch gekennzeichnet ist, daß das Fußteil wenigstens einen sich von der Unterseite des Fußteils in Richtung auf die Aufnahmenut erstreckenden Fortsatz aufweist, der zur Aufnahme in einer in der Aufnahmenut gebildeten Ausnehmung mit zum Fortsatz korrespondierender Form bestimmt ist.

Gegenstand der Erfindung ist ferner ein Gesteinsbohrer mit einem Schaft, einem Bohrkopf oder einer Bohrkrone und mindestens einer Hartmetallplatte der vorgenannten Art, die in wenigstens eine an einer Stirnseite des Bohrkopfes gebildete Aufnahmenut eingesetzt und darin durch Verlöten, Verschweißen oder Verkleben befestigt ist, wobei die Hartmetallplatte ein wenigstens eine Schneidkante tragendes Kopfteil und eine der Geometrie der Aufnahmenut angepaßtes Fußteil aufweist, und wobei der Gesteinsbohrer dadurch gekennzeichnet ist, daß das Fußteil wenigstens einen sich von der Unterseite des Fußteils in Richtung auf die Aufnahmenut erstreckenden Fortsatz aufweist, der in einer in der Aufnahmenut gebildeten Ausnehmung mit zum Fortsatz korrespondierender Form aufgenommen ist.

Weitere vorteilhafte Ausgestaltungen der Erfindung ergeben sich aus den Unteransprüchen.

Durch den Formschluß zwischen Fortsatz und Ausnehmung ist eine sichere Zentrierung der erfindungsgemäßen Hartmetallplatte im Bohrwerkzeug gewährleistet. Hierdurch verbessern sich die Rundlaufeigenschaften des erfindungsgemäßen Gesteinsbohrers. Durch die Ausbildung des Fortsatzes an der Unterseite des Fußteils wird zudem die für eine Benetzung mit Lot zur Verfügung stehende Fläche vergrößert. Dadurch ergibt sich eine verbesserte Haftung der erfindungsgemäßen Hartmetallplatte im Bohrwerkzeug. Die Gefahr des Ausbrechens während des Betriebs des Gesteinsbohrers ist dadurch wesentlich verringert. Durch die Ausbildung von Sicken im Bereich der Ausnehmung bzw. durch die Verringerung des Durchmessers der Ausnehmung im Vergleich zum Durchmesser des Fortsatzes ist es möglich, die Hartmetallplatte ohne Beschädigungsgefahr in den Gesteinsbohrer einzupressen. Die Hartmetallplatte muß in diesem Fall nicht mehr durch Verstemmungen im Bereich der Mantelfläche oder der Stirnfläche des Bohrkopfes gesichert werden. Hierdurch entfällt ein zusätzlicher Arbeitsschritt, der die Herstellungskosten des erfindungsgemäßen Gesteinsbohrers senkt. Darüber hinaus besteht beim Anbringen der Verstemmungen immer die Gefahr einer Beschädigung der Hartmetallplatte bzw. eines Verkantens der Platte als einer weiteren Ursache für ein Versagen des Bohrwerkzeugs im Betrieb. Auch diese Fehlerquelle kann also durch die erfindungsgemäße Hartmetallplatte und den erfindungsgemäßen Gesteinsbohrer beseitigt werden.

Weitere Merkmale und Vorteile der Erfindung ergeben sich aus der Beschreibung von Ausführungsbeispielen unter Bezugnahme auf die beigefügte Zeichnung. In der Zeichnung zeigen:
Figuren 1a bis 1d Seitenansichten, eine Draufsicht und eine perspektivische Ansicht einer erfindungsgemäßen Hartmetallplatte;
Figuren 2a bis 2d Seitenansichten, eine Draufsicht und eine perspektivische Ansicht einer weiteren Ausführungsform der erfindungsgemäßen Hartmetallplatte;
Figuren 3a bis 3d Seitenansichten, eine Draufsicht und eine perspektivische Ansicht einer weiteren Ausführungsform der erfindungsgemäßen Hartmetallplatte;
Figuren 4a bis 4d Seitenansichten, eine Draufsicht und eine perspektivische Ansicht einer weiteren Ausführungsform der erfindungsgemäßen Hartmetallplatte;
Figuren 5a bis 5d Seitenansichten, eine Draufsicht und eine perspektivische Ansicht einer erfindungsgemäßen Hartmetallplatte mit einer teilkreisförmigen Ausbuchtung an der Seitenfläche der Hartmetallplatte;
Figuren 6a bis 6d Seitenansichten, eine Draufsicht und eine perspektivische Ansicht einer weiteren Ausführungsform der erfindungsgemäßen Hartmetallplatte mit gegenüberliegenden teilkreisförmigen Ausbuchtungen an den Seitenflächen der Hartmetallplatte;
Figuren 7a und 7b eine schematische Darstellung sowie eine Draufsicht auf die Stirnseite eines erfindungsgemäßen Gesteinsbohrers; und
Figuren 8a und 8b eine schematische Darstellung sowie eine Draufsicht auf die Stirnfläche einer weiteren Ausführungsform des erfindungsgemäßen Gesteinsbohrers.

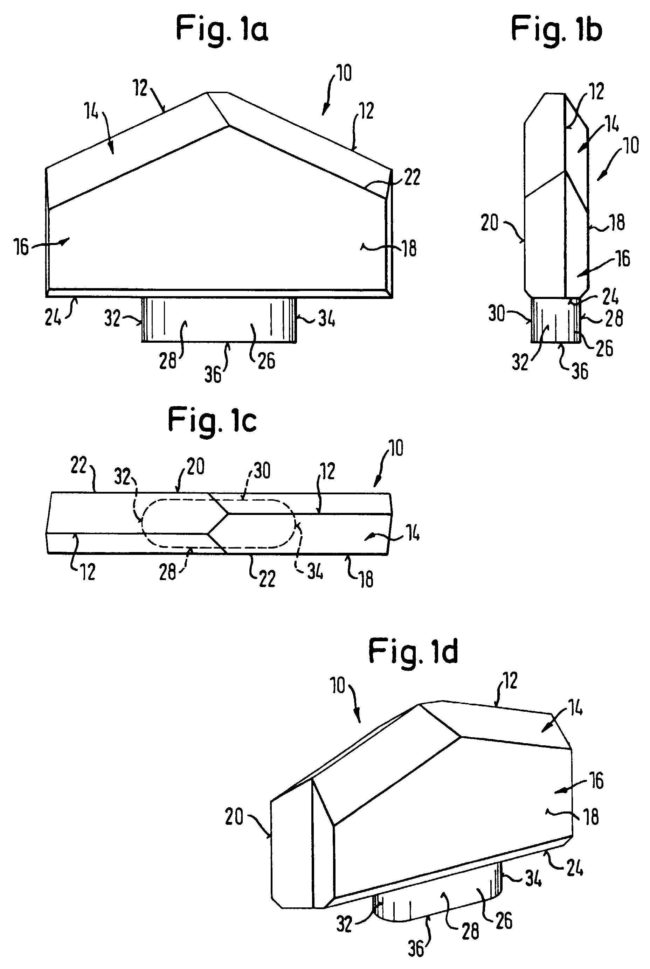

Die in den Figuren 1a bis 1d dargestellte erfindungsgemäße Hartmetallplatte 10 trägt an ihrem Kopfteil 14 zwei Hauptschneidkanten 12. An das Kopfteil 14 grenzen die Seitenwände 18, 20 des Fußteils an, die im wesentlichen parallel zueinander verlaufen und am Zusammentreffen mit dem Kopfteil 14 die Kante 22 ausbilden. Die Hartmetallplatte 10 weist an der dem Kopfteil 14 gegenüberliegenden Unterseite 24 einen Fortsatz 26 auf, der zur Aufnahme in einer in der an der Stirnfläche eines Gesteinsbohrers angeordneten Aufnahmenut gebildeten Ausnehmung (hier nicht gezeigt) mit zum Fortsatz korrespondierender Form bestimmt ist.

Bei der hier gezeigten Hartmetallplatte weist der Fortsatz 26 sich parallel zu den Seitenwänden 18, 20 des Fußteils 16 erstreckende, einander gegenüberliegende Seitenflächen 28, 30 auf. Die an die Seitenflächen 28, 30 angrenzenden Stirnflächen 32, 34 liegen ebenfalls einander gegenüber und sind bei der hier gezeigten Ausführungsform konvex ausgebildet. Sie können aber auch jede beliebige andere Form aufweisen. Die untere Wand 36 des Fortsatzes verläuft hier parallel zur Unterseite 24 des Fußteils 16. Der Fortsatz ist in Bezug auf die Hartmetallplatte im wesentlichen mittig angeordnet und erstreckt sich über mindestens ein Drittel der Fläche der Fußteilunterseite. Die Breite des Fortsatzes 26 ist bevorzugt kleiner als die Breite der Hartmetallplatte 10. Der Fortsatz 26 kann jedoch auch die gleiche Breite wie die Hartmetallplatte 10 aufweisen.

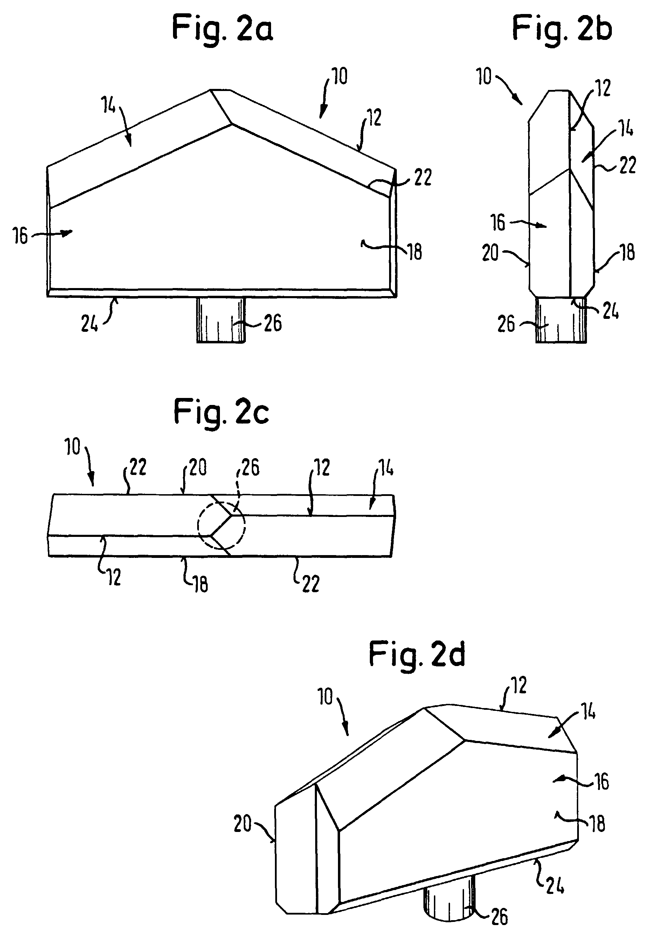

Zur Beschreibung des grundsätzlichen Aufbaus der in den Figuren 2a bis 2d dargestellten Hartmetallplatte kann auf die Beschreibung der in den Figuren 1a bis 1d gezeigten Hartmetallplatte verwiesen werden. Der an der Unterseite des Fußteils 16 angeordnete Fortsatz 26 ist bei der hier gezeigten Ausführungsform zylinderförmig ausgebildet und weist daher einen kreisförmigen Querschnitt auf. Der Durchmesser des Fortsatzes 26 ist kleiner als die Breite des Fußteils 16. Bei der hier dargestellten Ausführungsform ist der Fortsatz 26 im wesentlichen mittig in Bezug auf die Hartmetallplatte 10 angeordnet. Er kann jedoch auch in radialer Richtung und/oder seitlich versetzt angeordnet sein. Ferner können an der Unterseite 24 des Fußteils 16 mehrere Fortsätze mit gleichem oder verschiedenem Durchmesser ausgebildet sein.

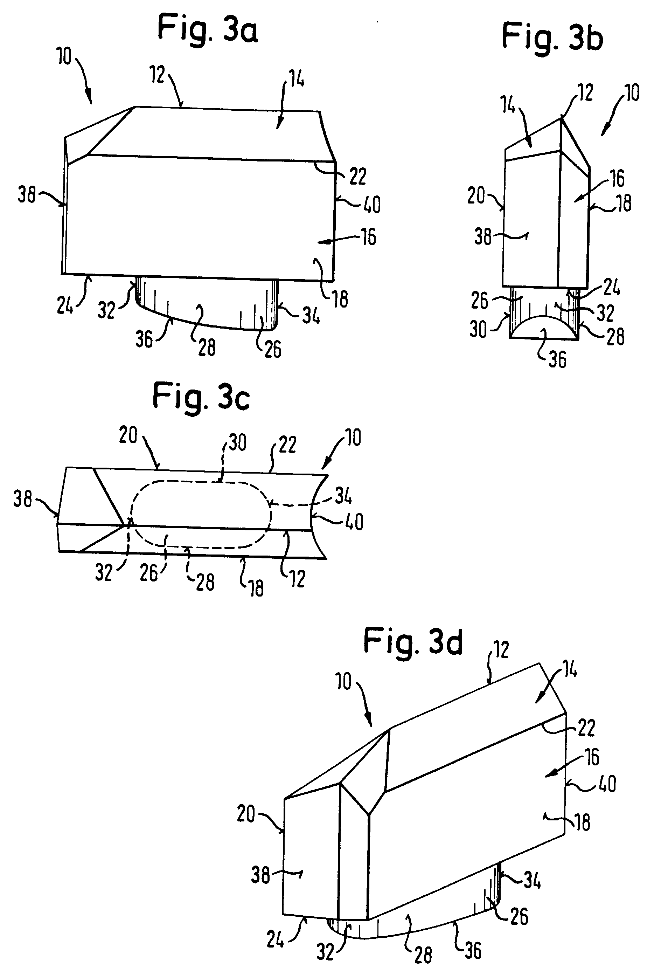

Die Figuren 3a bis 3d zeigen eine weitere Ausführungsform einer erfindungsgemäßen Hartmetallplatte 10. Das Kopfteil 14 dieser Hartmetallplatte trägt eine Schneidkante 12 und ist im Bereich der nach dem Einsetzen in einen Bohrkopf radial nach außen gerichteten Stirnfläche 38 abgefast. Die der Stirnfläche 38 gegenüberliegende rückwärtige Fläche 40 ist hier konkav ausgebildet. Der an der Unterseite 24 des Fußteils 16 angeordnete Fortsatz 26 weist wie bei der in den Figuren 1a bis 1d gezeigten Ausführungsform zwei gegenüberliegende Seitenflächen 28, 30 sowie an die Seitenflächen 28, 30 angrenzende einander gegenüberliegende, konvexe Stirnflächen 32, 34 auf. Im Unterschied zu der in den Figuren 1 a bis 1 d dargestellten Ausführungsform ist die untere Wand 36 bei der hier dargestellten Ausführungsform abgeschrägt. Diese ermöglicht eine genaue Ausrichtung der Hartmetallplatte beim Einsetzen in das Bohrwerkzeug.

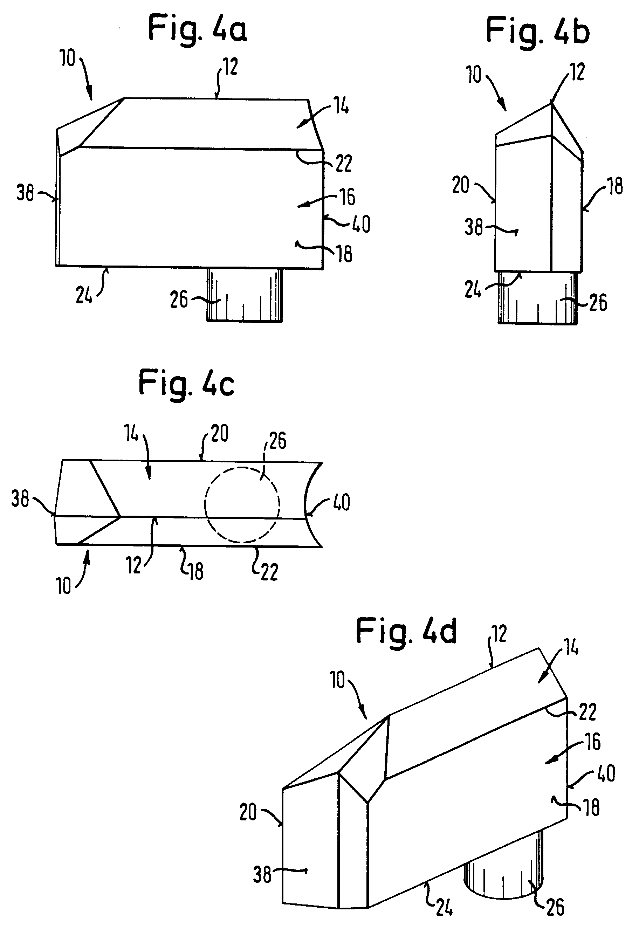

Bei der in den Figuren 4a bis 4d gezeigten Hartmetallplatte 10 ist der Fortsatz 26 kreisförmig ausgebildet und in radialer Richtung versetzt angeordnet. Die Versetzung des Fortsatzes 26 erfolgt hier in Richtung auf die rückwärtige Wand 40. Der Fortsatz kann jedoch auch in Richtung auf die Stirnfläche 38 versetzt werden. Es ist ebenso möglich, den Fortsatz im wesentlichen mittig zur Hartmetallplatte 10 anzuordnen.

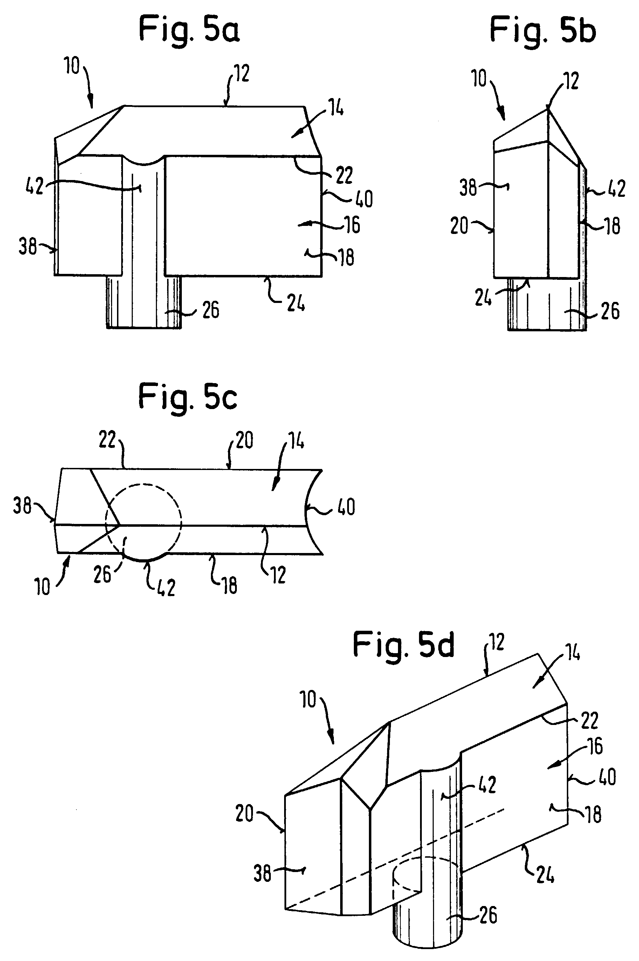

Die in den Figuren 5a bis 5d dargestellte Hartmetallplatte 10 weist eine an der Seitenwand 18 des Fußteils 16 gebildete teilkreisförmige Ausbuchtung 42 auf. Zur Bildung des Fortsatzes 26 ist die teilkreisförmige Ausbuchtung 42 über die Unterseite 24 des Fußteils 16 hinaus verlängert. Der Durchmesser des Fortsatzes 26 ist hier kreisförmig. Bei der dargestellten Ausführungsform ist die Ausbuchtung 42 und der Fortsatz 26 in bezug auf die Mitte der Hartmetallplatte 10 radial in Richtung auf die Stirnfläche 38 des Fußteils 16 versetzt. Es ist jedoch auch möglich, die Ausbuchtung 42 und den Fortsatz 26 im wesentlichen mittig in bezug auf die Hartmetallplatte anzuordnen oder in Richtung auf die rückwärtige Wand 40 zu versetzen. Ebenso ist es möglich die teilkreisförmige Ausbuchtung an der der Seitenwand 18 gegenüberliegenden Seitenwand 20 des Fußteils 16 anzuordnen.

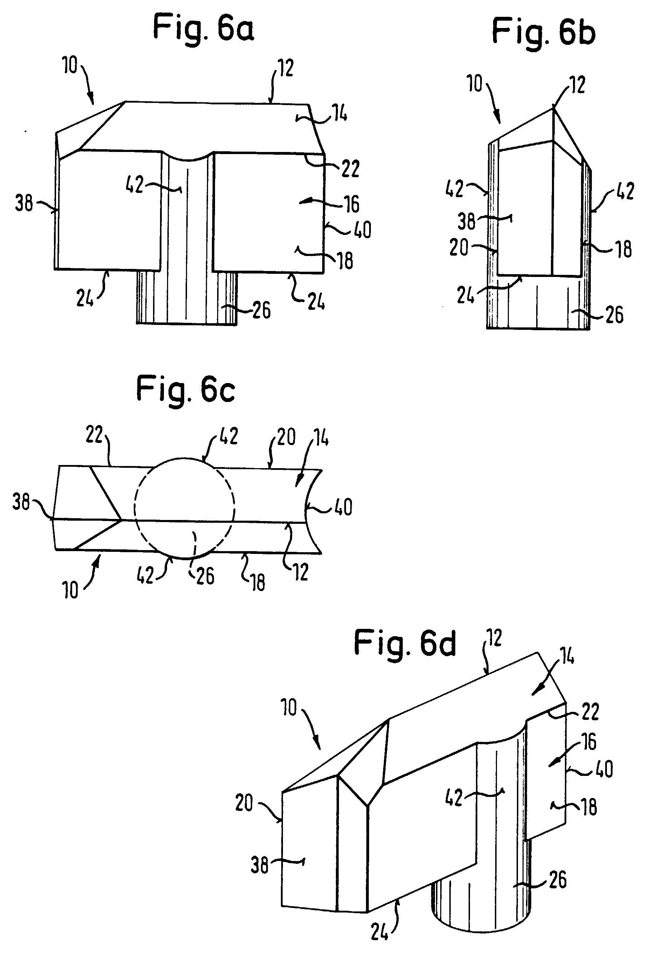

Die Figuren 6a bis 6d zeigen schließlich eine erfindungsgemäße Hartmetallplatte 10 mit zwei gegenüberliegenden teilkreisförmigen Ausbuchtungen 42, die an den Seitenwänden 18 und 20 des Fußteils 16 ausgebildet sind. Auch bei dieser dargestellten Ausführungsform ist der Fortsatz 26 durch eine Verlängerung der Ausbuchtungen 42 über die Unterseite 24 des Fußteils 16 hinaus gebildet. Der Fortsatz 26 ist hier ebenfalls zylinderförmig ausgebildet; jedoch ist der Durchmesser des Fortsatzes 26 größer als die Breite des Fußteils 16 im Bereich außerhalb der Ausbuchtungen 42.

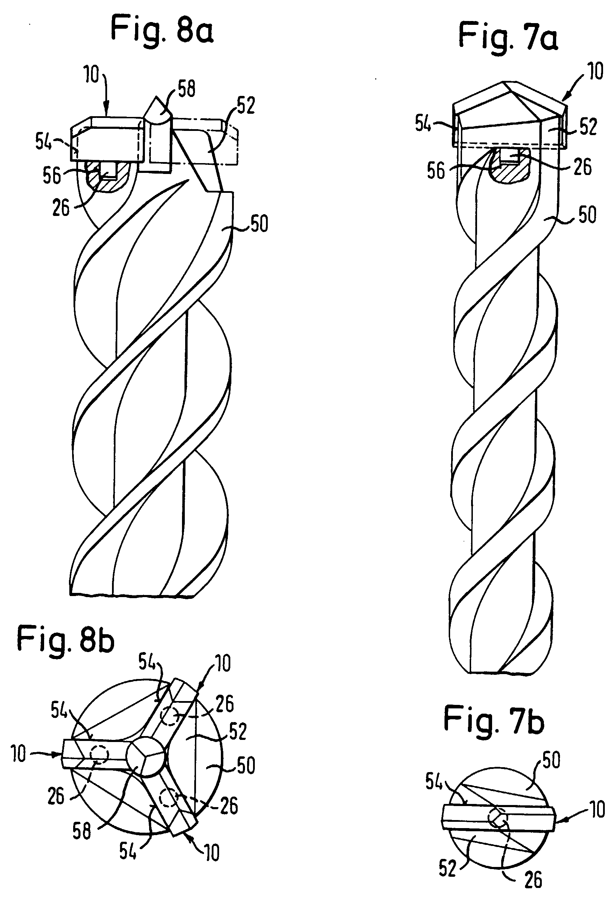

Der in den Figuren 7a, 7b sowie 8a und 8b dargestellte erfindungsgemäße Gesteinsbohrer trägt auf seinem Schaft 50 einen Bohrkopf oder eine Bohrkrone 52 mit einer im Querschnitt im wesentlichen rechteckigen Aufnahmenut 54. Bei der in den Figuren 7a und 7b dargestellten Ausführungsform erstreckt sich die Aufnahmenut 54 vollständig über den Durchmesser des Bohrerschaftes 50. Der in den Figuren 8a und 8b dargestellte Gesteinsbohrer weist dagegen drei in einem Winkel von etwa 120° zueinander angeordnete, sich radial nach außen erstreckende Aufnahmenuten 54 auf. In die Aufnahmenuten 54 ist eine der oben beschriebenen erfindungsgemäßen Hartmetallplatten 10 eingesetzt. Am Zusammentreffen der Hartmetallplatten 10 in der Mitte der Bohrkrone 52 ist ein Zentrierstift 58 angeordnet. Die Geometrie des Fußteils 16 der Hartmetallplatte 10 ist an die Geometrie der Aufnahmenut 54 angepaßt. Am Boden der Aufnahmenut 54 ist jeweils eine Ausnehmung 56 mit zum Fortsatz 26 korrespondierender Form ausgebildet. Das Zusammenwirken von Ausnehmung 56 und Fortsatz 26 ermöglicht ein sicheres Zentrieren der erfindungsgemäßen Hartmetallplatte 10 im Bohrkopf 52 und vergrößert die für eine Verbindung der Hartmetallplatte 10 mit den Wänden der Aufnahmenut 54 zur Verfügung stehende Fläche.

In vorteilhafter Weise weist die Ausnehmung 56 einen geringfügig kleineren Durchmesser als der Fortsatz 56 auf. Insbesondere können an den Seitenflächen der Aufnahmenut 54 Sicken oder Rippen ausgebildet sein, die ein Verklemmen des Fortsatzes 26 in der Ausnehmung 56 ermöglichen. Es ist auch denkbar, die Wandbereiche des Fortsatzes 26 mit einer entsprechend profilierten Oberfläche zu versehen. Durch diese Maßnahme ist es möglich, auf ein Verstemmen der Hartmetallplatte im Bereich der Mantelfläche des Bohrerschaftes 50 oder der Stirnfläche des Bohrkopfes 52 zu verzichten. Gleichzeitig wird dadurch die Gefahr einer Beschädigung der Hartmetallplatte 10 schon bei der Herstellung des Bohrers vermieden.

Zur Herstellung des erfindungsgemäßen Gesteinsbohrers werden zunächst die Aufnahmenuten 54 im Bohrkopf 52 ausgefräst und an die Geometrie des Fußteils der jeweils einzusetzenden Hartmetallplatte 10 angepaßt. Die Ausnehmung 56 in der Aufnahmenut 54 kann dabei in vorteilhafter Weise durch Aufbohren des Bodens der Aufnahmenut 54 an der jeweils gewünschten Stelle hergestellt werden. Die den teilkreisförmigen Ausbuchtungen 42 der Seitenwände der Hartmetallplatten 10 entsprechenden Ausformungen können dabei ebenfalls durch ein Aufbohren der Aufnahmenut eingebracht werden. Danach wird die der Geometrie der Aufnahmenut entsprechende Hartmetallplatte ausgewählt und in die Nut eingesetzt. Der Eingriff des Fortsatzes 26 in die Ausnehmung 56 in der Aufnahmenut 54 verhindert dabei ein radiales Verschieben der Hartmetallplatten. Falls die Ausnehmung 56 bzw. der Fortsatz 26 so ausgestaltet ist, daß ein Verklemmen des Fortsatzes 26 in der Ausnehmung 56 möglich ist, muß die Hartmetallplatte nicht mehr durch eine Verstemmung fixiert werden. Schließlich wird die Hartmetallplatte mit der Aufnahmenut in bekannter Weise durch Löten, Schweißen oder Kleben verbunden. Durch die vergrößerte Auflagefläche ist eine zuverlässige Haftung der Hartmetallplatte in der Aufnahmenut gewährleistet und die Bruchgefahr beim Betrieb des Bohrers wesentlich verringert.

## Patentansprüche

1. Hartmetallplatte (10) für Bohrwerkzeuge, insbesondere Gesteinsbohrer, mit einem wenigstens eine Schneidkante (12) tragenden Kopfteil (14) und einem der Geometrie einer Aufnahmenut (54) im Bohrwerkzeug angepaßten Fußteil (16), dadurch gekennzeichnet, daß das Fußteil (16) wenigstens einen sich von der Unterseite (24) des Fußteils in Richtung auf die Aufnahmenut (54) erstreckenden Fortsatz (26) aufweist, der zur Aufnahme in einer in der Aufnahmenut (54) gebildeten Ausnehmung (56) mit zum Fortsatz (26) korrespondierender Form bestimmt ist.

2. Hartmetallplatte nach Anspruch 1, dadurch gekennzeichnet, daß der Fortsatz (26) sich parallel zu einer Seitenwand (18, 20) des Fußteils (16) erstreckende, einander gegenüberliegende Seitenflächen (28, 30) und an die Seitenflächen (28, 30) angrenzende, einander gegenüberliegende Stirnflächen (32, 34) aufweist.

3. Hartmetallplatte nach Anspruch 2, dadurch gekennzeichnet, daß die Stirnflächen (32, 34) des Fortsatzes (26) konvex ausgebildet sind.

4. Hartmetallplatte nach einem der Ansprüche 1 bis 3, dadurch gekennzeichnet, daß der Fortsatz (26) sich mindestens über ein Drittel der Fläche der Fußteilunterseite (24) erstreckt.

5. Hartmetallplatte nach Anspruch 1, dadurch gekennzeichnet, daß der Fortsatz (26) einen etwa kreisförmigen Querschnitt aufweist.

6. Hartmetallplatte nach Anspruch 5, dadurch gekennzeichnet, daß der Durchmesser des Fortsatzes (26) kleiner als die Breite des Fußteils (16) ist.

7. Hartmetallplatte nach Anspruch 5, dadurch gekennzeichnet, daß das Fußteil (16) wenigstens eine teilkreisförmige Ausbuchtung (42) aufweist und der Fortsatz (26) durch eine Verlängerung der Ausbuchtung (42) über die Unterseite (24) des Fußteils (16) hinaus gebildet ist.

8. Hartmetallplatte nach Anspruch 7, dadurch gekennzeichnet, daß das Fußteil (16) zwei einander gegenüberliegende teilkreisförmige Ausbuchtungen (42) aufweist und der Fortsatz (26) durch eine Verlängerung der Ausbuchtungen (42) über die Unterseite (24) des Fußteils (16) hinaus gebildet ist, wobei der Durchmesser des Fortsatzes (26) größer als die Breite des Fußteils (16) außerhalb des Bereichs der Ausbuchtungen (42) ist.

9. Hartmetallplatte nach einem der Ansprüche 1 bis 8, dadurch gekennzeichnet, daß der Fortsatz (26) im wesentlichen mittig in bezug auf die Hartmetallplatte (10) angeordnet ist.

10. Hartmetallplatte nach einem der Ansprüche 1 bis 8, dadurch gekennzeichnet, daß der Fortsatz (26) radial und/oder seitlich versetzt angeordnet ist.

11. Gesteinsbohrer mit einem Schaft (50), einem Bohrkopf oder einer Bohrkrone (52) und mindestens einer Hartmetallplatte (10) gemäß einem der Ansprüche 1 bis 10, die in wenigstens eine an einer Stirnseite des Bohrkopfes (52) gebildeten Aufnahmenut (54) eingesetzt und darin durch Verlöten, Verschweißen oder Verkleben befestigt ist, wobei die Hartmetallplatte (10) ein wenigstens eine Schneidkante (12) tragendes Kopfteil (14) und eine der Geometrie der Aufnahmenut (54) angepaßtes Fußteil (16) aufweist, dadurch gekennzeichnet, daß das Fußteil (16) wenigstens einen sich von der Unterseite (24) des Fußteils (16) in Richtung auf die Aufnahmenut (54) erstreckenden Fortsatz (26) aufweist, der in einer in der Aufnahmenut (54) gebildeten Ausnehmung (56) mit zum Fortsatz korrespondierender Form aufgenommen ist.

12. Gesteinsbohrer nach Anspruch 11, dadurch gekennzeichnet, daß die Ausnehmung (56) zum Verklemmen des Fortsatzes (26) in ihrem Randbereich mit einer oder mehreren Sicken verstärkt ist.

13. Gesteinsbohrer nach Anspruch 11, dadurch gekennzeichnet, daß die Ausnehmung (56) einen geringfügig kleineren Durchmesser als der Fortsatz (26) aufweist.

14. Gesteinsbohrer nach einem der Ansprüche 11 bis 13, dadurch gekennzeichnet, daß sich die Hartmetallplatte (10) mindestens über den gesamten Durchmesser des Bohrkopfes oder der Bohrkrone (54) erstreckt.

15. Gesteinsbohrer nach einem der Ansprüche 11 bis 13, dadurch gekennzeichnet, daß mehrere Hartmetallplatten (10) vorgesehen sind, die sich über einen Teilbereich des Durchmessers des Bohrkopfes oder der Bohrkrone (54) erstrecken.
